# EUROPÄISCHE PATENTSCHRIFT

(11) **EP 2 873 695 B1**
(45) Veröffentlichungstag und Bekanntmachung des Hinweises auf die Patenterteilung: **03.02.2016**
(21) Anmeldenummer: 13192691.7
(22) Anmeldetag: 13.11.2013
(51) Int. Cl.: C08J 9/232, C08J 9/236, E04B 1/76, E04B 1/78

(54) **VERFAHREN ZUR HERSTELLUNG EINER DÄMM- UND DRAINAGEPLATTE SOWIE DÄMM- UND DRAINAGEPLATTE**
METHOD FOR THE PRODUCTION OF A THERMAL INSULATION AND DRAINING PANEL AND THERMAL INSULATION AND DRAINING PANEL
PROCEDE DE FABRICATION D'UNE PLAQUE D'ISOLATION ET DE DRAINAGE ET PLAQUE D'ISOLATION ET DE DRAINAGE

(43) Veröffentlichungstag der Anmeldung: 20.05.2015
(73) Patentinhaber: STO SE & Co. KGaA, 79780 Stühlingen (DE)
(72) Erfinder: Hitzler, Martin, 78244 Gottmadingen (DE); Weier, Andreas, 78647 Trossingen (DE); Kohler, Eva, 79777 Ühlingen-Birkendorf (DE); Burgeth, Gerald, 79787 Lauchringen (DE); Nägele, Alexander, 79848 Bonndorf (DE)
(74) Vertreter: Gottschalk, Matthias

(56) Entgegenhaltungen:
- EP-A1- 2 527 124

## Beschreibung

Die Erfindung betrifft ein Verfahren zur Herstellung einer Dämm- und Drainageplatte mit den Merkmalen des Oberbegriffs des Anspruchs 1. Ferner betrifft die Erfindung eine Dämm- und Drainageplatte mit den Merkmalen des Oberbegriffs des Anspruchs 13.

### Stand der Technik

Dämmplatten, die zugleich eine Drainagefunktion besitzen, sind aus dem Stand der Technik hinlänglich bekannt. Derartige Dämmplatten werden vorrangig zur Wärmedämmung von im Erdreich liegenden Außenwänden eines Gebäudes eingesetzt. Ihre Aufgabe ist es, Feuchtigkeit vom Gebäude fern zu halten. Um dies zu erreichen, weisen derartige Dämmplatten an ihrer dem Gebäude zuzuwendenden Oberfläche häufig eine reliefartige Gestaltung auf, so dass zwischen der Außenwand und der Dämmplatte Hohlräume entstehen, über welche die Feuchtigkeit abtransportiert werden kann.

Eine als Drainageplatte einsetzbare Wärmedämmplatte geht beispielhaft aus der DE 10 2004 033 535 A1 hervor. Zur Realisierung der Drainagefunktion besitzt die Platte zumindest einseitig eine Profilierung. Die Profilierung kann beispielsweise in die Oberfläche der Platte eingearbeitete Rillen oder Vertiefungen umfassen. Diese dienen als Ablaufkanäle, so dass hierüber die Drainagefunktion realisierbar ist. Sofern die Platte nur einseitig profiliert ist, kommt die profilierte Oberfläche bevorzugt an der zu dämmenden Gebäudeaußenwand zu liegen. Die der Gebäudeaußenwand abgewandte Oberfläche kann mit einem Filtervlies versehen sein, um das Einspülen von Erdreich zu verhindern.

Darüber hinaus sind Drainageplatten bekannt, die sowohl im Erdreich als auch über dem Gelände zur Dämmung einer Gebäudeaußenwand eingesetzt werden können. Eine solche Platte geht beispielsweise aus der WO 2011/113956 A2 hervor. In dieser Druckschrift wird eine Isolier- und Drainageplatte offenbart, die von miteinander verklebten Perlen aus Schaumstoff gebildet wird, wobei zwischen den Perlen vorhandene Poren ein Netz für das Ablaufen von Wasser ausbilden. Die Drainagefunktion wird demnach über das Plattenmaterial selbst bewirkt, so dass die Ausbildung von Ablaufkanälen entbehrlich ist. Dies hat zudem den Vorteil, dass die Feuchtigkeit im Inneren der Platte abgeführt wird und somit sowohl fern von der Gebäudeaußenwand, an welcher die Platte angebracht ist, als auch fern von einer auf der Platte aufgebrachten Beschichtung in Form eines Putzes und/oder eines Anstrichs gehalten wird, sofern eine solche Beschichtung vorgesehen ist. Um das Abführen der Feuchtigkeit im Inneren der Platte zu unterstützen, weist die in dieser Druckschrift vorgeschlagene Platte zudem ein sich verjüngendes freies Ende auf, das bei Anbringung der Platte an einer Gebäudeaußenwand unten zu liegen kommt und die Feuchtigkeit trichterartig zur Mitte der Platte hin leitet.

Ferner wird in der vorstehend genannten Druckschrift ein Verfahren zur Herstellung einer Isolier- und Drainageplatte offenbart, bei dem Perlen aus Schaumstoff und ein Bindemittel gemischt werden, so dass nach dem Aushärten bzw. Trocknen des Bindemittels ein Verbund der Perlen aus Schaumstoff über das Bindemittel erzielt wird.

Die EP 2527124 beschreibt ein Verfahren zur Herstellung eines Formkörpers zur Schall- und/oder Wärmedämmung, bei dem vorgeschäumte Polystyrol-Partikel in einer Form unter Einwirkung von Druck und/oder Wärme zu einem Formkörper verdichtet werden, so dass ein zusammenhängendes Hohlraumvolumen erhalten bleibt. Die vorgeschäumten Partikel können von dem Verdichten mit einem organischen oder anorganischen Bindemittel beschichtet werden.

Ausgehend von dem vorstehend genannten Stand der Technik liegt der vorliegenden Erfindung die Aufgabe zugrunde, ein Verfahren zur Herstellung einer Dämm- und Drainageplatte anzugeben, die aufgrund eines zusammenhängenden Hohlraumvolumens wasserdampfdiffusionsoffenen und wasserdurchlässig ist und zudem einfach und kostengünstig herstellbar ist. Ferner soll die Dämm- und Drainageplatte gute Wärmedämmeigenschaften und eine ausreichende mechanische Stabilität besitzen.

Zur Lösung der Aufgabe wird das Verfahren mit den Merkmalen des Anspruchs 1 vorgeschlagen. Vorteilhafte Weiterbildungen sind den Unteransprüchen zu entnehmen. Ferner wird eine Dämm- und Drainageplatte angegeben, die entsprechende Eigenschaften besitzt sowie einfach und kostengünstig herstellbar ist.

### Offenbarung der Erfindung

Das zur Herstellung einer Dämm- und Drainageplatte vorgeschlagene Verfahren sieht die Verwendung schäumbarer und/oder vorgeschäumter Polystyrol-Partikel sowie eines organischen Bindemittels vor. Erfindungsgemäß werden die schäumbaren und/oder vorgeschäumten Polystyrol-Partikel mit dem organischen Bindemittel beschichtet, in eine Form eingefüllt und einem Endschäumprozess unterzogen, wobei zum Beschichten der schäumbaren und/oder vorgeschäumten Polystyrol-Partikel ein pulverförmiges organisches Bindemittel verwendet wird, das durch Zugabe von Feuchtigkeit und/oder Wärme aktiviert wird, so dass ein die Polystyrol-Partikel zumindest teilweise umhüllender Bindemittelfilm ausgebildet wird, der die Expansion der Polystyrol-Partikel während des Endschäumprozesses verringert. Durch die verringerte Expansion der Polystyrol-Partikel bleibt ein Zwickelvolumen zwischen den Partikeln erhalten, das ein zusammenhängendes Hohlraumvolumen ausbildet. Die derart hergestellte Platte ist somit wasserdurchlässig und als Drainageplatte einsetzbar. Zugleich wird ein stabiler Verbund der Polystyrol-Partikel untereinander erreicht, da während des Endschäumprozesses - wenn auch in verringerten Maße - eine Verschweißung der Partikel erzielt wird. Darüber hinaus bewirkt das durch die Zugabe von Feuchtigkeit und/oder Wärme aktivierte Bindemittel eine Verklebung der Partikel, die der Platte eine zusätzliche Stabilität verleiht.

Der die Polystyrol-Partikel während des Endschäumprozesses zumindest teilweise umhüllende Bindemittelfilm führt zwar zu einer Verringerung der Expansion, dennoch ist eine Vergrößerung des Zellvolumens der Partikel zu verzeichnen. Die derart hergestellte Dämm- und Drainageplatte weist demzufolge ferner gute Wärmedämmeigenschaften auf. Das Maß der Expansion bzw. der Vergrößerung des Zellvolumens der Partikel ist dabei über den Bindemittelanteil steuerbar.

Die Verwendung des Bindemittels in Pulverform weist den Vorteil auf, dass das Bindemittel erst durch die Zugabe von Feuchtigkeit und/oder Wärme aktiviert wird. Die Beschichtung der Partikel mit dem Bindemittel kann demnach vor dem eigentlichen Endschäumprozess erfolgen.

Als Ausgangsstoffe können schäumbare und/oder vorgeschäumte Polystyrol-Partikel verwendet werden, die vor dem Endschäumprozess mit dem pulverförmigen organischen Bindemittel beschichtet werden. Die Beschichtung erfolgt durch Inkontaktbringen des pulverförmigen organischen Bindemittels mit den schäumbaren und/oder vorgeschäumten Polystyrol-Partikeln. Aufgrund der Oberflächenrauigkeit der Partikel wird durch das Inkontaktbringen eine Haftung des pulverförmigen Bindemittels an den Partikeln erreicht. Vorzugsweise erfolgt das Inkontaktbringen durch Mischen der Ausgangsstoffe, um eine gleichmäßige Verteilung des Bindemittels sicherzustellen.

Werden schäumbare Polystyrol-Partikel, sogenannte Polystyrol-Beads, verwendet, kann das Beschichten mit dem Bindemittel während eines Vorschäumprozesses erfolgen. Hierzu werden die Polystyrol-Beads und das Bindemittelpulver in einen Vorschäumbehälter gegeben, der vorzugsweise zugleich als Rührer oder Mischer ausgelegt ist. Die Bewegung im Vorschäumbehälter trägt dann zu einer gleichmäßigen Verteilung des Bindemittels bei.

Wird beim Vorschäumen - wie regelmäßig der Fall - Wasserdampf als Heizmedium eingesetzt, führt dies zu einem Erweichen des Bindemittels. Unterstützt von der Bewegung der Polystyrol-Partikel im Vorschäumbehälter legt sich das erweichte Bindemittel um die Partikel, so dass diese zumindest teilweise von dem Bindemittel umhüllt werden.

Das Beschichten der schäumbaren Polystyrol-Partikel mit Bindemittel während des Vorschäumens besitzt den Vorteil, dass das zunächst nur oberflächlich anhaftende Bindemittelpulver in die Oberfläche der expandierenden Polystyrol-Partikel eindringt. Zugleich erfolgt eine Aktivierung des Bindemittels, sofern Wasserdampf als Heizmedium eingesetzt wird. Die Aktivierung des Bindemittels durch die Zugabe von Feuchtigkeit und/oder Wärme kann demnach ebenfalls bereits vor dem eigentlichen Endschäumprozess erfolgen. Werden die schäumbaren Polystyrol-Partikel während des Vorschäumens beschichtet, genügt bereits eine relativ geringe Menge an Bindemittel, um eine gleichmäßige und effektive Beschichtung zu erzielen.

Werden vorgeschäumte Polystyrol-Partikel, sogenannte Polystyrol-Perlen, verwendet, werden diese zunächst mit dem Bindemittel beschichtet und anschließend in einer Form endgeschäumt. Das Beschichten erfolgt wiederum durch Inkontaktbringen des pulverförmigen organischen Bindemittels mit den Partikeln. Die zur Aktivierung des pulverförmigen organischen Bindemittels erforderliche Feuchtigkeit und/oder Wärme kann während des Endschäumens oder bereits beim Beschichten zugegeben werden.

Unabhängig davon, ob schäumbare oder vorgeschäumte Polystyrol-Partikel verwendet werden, kann die zur Aktivierung des Bindemittels erforderliche Feuchtigkeit und/oder Wärme auf unterschiedliche Art und Weise zugegeben werden. Eine Möglichkeit wurde bereits in Zusammenhang mit schäumbaren Polystyrol-Partikeln als Ausgangsstoffe benannt, die unter Verwendung von Wasserdampf in einem Vorschäumbehälter vorgeschäumt werden. In diesem Fall wird die erforderliche Feuchtigkeit über den Wasserdampf zur Verfügung gestellt.

Des Weiteren können die schäumbaren und/oder vorgeschäumten Polystyrol-Partikel vor dem Beschichten mit dem pulverförmigen organischen Bindemittel angefeuchtet werden. Wird anschließend das pulverförmige organische Bindemittel in Kontakt mit den angefeuchteten Polystyrol-Partikeln gebracht, bewirkt die Feuchtigkeit eine verbesserte Haftung des pulverförmigen Bindemittels an den Partikeln.

Ferner können (noch) feuchte vorgeschäumte Polystyrol-Partikel verwendet werden, die durch das Vorschäumen eine gewisse Restfeuchte enthalten. In diesem Fall ist der Verfahrensschritt des Anfeuchtens entbehrlich. Es können ferner angefeuchtete schäumbare und (noch) feuchte oder angefeuchtete vorgeschäumte Polystyrol-Partikel in Kombination eingesetzt werden.

Die Zugabe von Feuchtigkeit erfolgt in diesen Fällen durch Inkontaktbringen bzw. Mischen des pulverförmigen organischen Bindemittels mit den (noch) feuchten oder angefeuchteten Polystyrol-Partikeln. Die Feuchtigkeit verbessert die Haftung des Bindemittels an den Partikeln.

Da die Zugabe von Feuchtigkeit während des Beschichtens der Polystyrol-Partikel mit dem pulverförmigen organischen Bindemittel bereits eine Aktivierung des Bindemittels bewirken kann, können die Verfahrensschritte "Beschichten der Partikel mit dem pulverförmigen organischen Bindemittel" und "Aktivierung des Bindemittels" zusammenfallen. Dies ist beispielsweise der Fall, wenn das Beschichten im Vorschäumbehälter erfolgt und die zur Aktivierung des Bindemittels erforderliche Feuchtigkeit und/oder Wärme durch den Einsatz von Wasserdampf als Heizmedium zugegeben wird. Das zeitliche Zusammenfallen dieser Schritte erweist sich als vorteilhaft, da das Bindemittel durch die Aktivierung erweicht und sich in einer dünnen, die Partikel zumindest teilweise umhüllenden Schicht um die Partikel legt. Dadurch ist während der nachfolgenden Schritte, insbesondere während des Endschäumens, die gewünschte "korsettähnliche" Funktion des Bindemittels sichergestellt, die verhindert, dass sich die Partikel ungehindert ausdehnen und das Zwickelvolumen ausfüllen. Ferner wird über die verbesserte Haftung des Bindemittels an den Partikeln verhindert, dass das Bindemittel während des Endschäumprozesses das Zwickelvolumen ausfüllt.

Sofern die Verfahrensschritte "Beschichten der Partikel mit dem pulverförmigen organischen Bindemittel" und "Aktivierung des Bindemittels" zusammenfallen, führt dies zu einer deutlichen Vereinfachung des Verfahrens zur Herstellung einer Dämm- und Drainageplatte. Dies wirkt sich zudem günstig auf die Herstellungskosten aus. Ferner kann das erfindungsgemäße Verfahren auf bereits vorhandenen Anlagen durchgeführt werden, die der Herstellung herkömmlicher Polystyrol-Hartschaumplatten dienen. Die Durchführung des erfindungsgemäßen Verfahrens bedarf demnach keiner neuen Anlagentechnik.

Sofern ausschließlich schäumbare Polystyrol-Partikel verwendet werden, die vor dem Endschäumprozess mit Bindemittel beschichtet werden, kann der Zwischenschritt des Vorschäumens entfallen, so dass die schäumbaren Polystyrol-Partikel nur einem Schäumprozess unterzogen werden. In diesem Fall werden die schäumbaren Polystyrol-Partikel vorzugsweise vor dem Beschichten mit dem pulverförmigen organischen Bindemittel angefeuchtet.

Bevorzugt wird ein Dispersionspulver, beispielsweise ein Dispersionspulver auf Basis von Homo-, Co- oder Terpolymeren von Acrylaten, Styrolacrylat, Vinylacetat, Ethylen, Vinylversatat, Vinyllaurat, Alkylacrylaten und/oder Vinylchlorid, als pulverförmiges organisches Bindemittel zum Beschichten der schäumbaren und/oder vorgeschäumten Polystyrol-Partikel verwendet. Die Verwendung eines organischen Bindemittels besitzt den Vorteil, dass der Bindemittelanteil reduziert werden kann. Denn im Vergleich zu anorganischen Bindemitteln weisen organische Bindemittel eine erhöhte Bindekraft auf. Ein reduzierter Bindemittelanteil wirkt sich wiederum günstig auf die Größe des verbleibenden Zwickelvolumens aus, da sich dieses nicht mit überschüssigem Bindemittel füllt. Zugleich wird ein stabiler Verbund der Polystyrol-Partikel untereinander erreicht. Anstelle eines einzigen organischen Bindemittels kann auch eine Bindemittelkombination aus verschiedenen organischen Bindemitteln verwendet werden.

Weiterhin bevorzugt werden 25 bis 99,5 Gew.-%, vorzugsweise 50 bis 99 Gew.-%, weiterhin vorzugsweise 75 bis 98,5 Gew.-% schäumbare und/oder vorgeschäumte Polystyrol-Partikel und 0,5 bis 75 Gew.-%, vorzugsweise 1 bis 50 Gew.-%, weiterhin vorzugsweise 1,5 bis 25 Gew.-% pulverförmiges organisches Bindemittel bezogen auf das Gesamtgewicht der Ausgangsstoffe verwendet werden. Die Anteile sind in Abhängigkeit von den jeweils konkret verwendeten Ausgangsstoffen zu bestimmen. Da über den Bindemittelanteil der Grad der Expansion und damit der Grad der Verschweißung der Partikel steuerbar ist, kommt dem Bindemittelanteil eine gewisse Bedeutung zu. Zugleich soll das Bindemittel eine Verklebung der Partikel bewirken. Ferner ist der Bindemittelanteil derart zu wählen, dass zwischen den Partikeln ein ausreichend großes Zwickelvolumen verbleibt, so dass das angestrebte zusammenhängende Hohlraumvolumen ausgebildet wird.

Eine nach einem erfindungsgemäßen Verfahren hergestellte Dämm- und Drainageplatte weist vorzugsweise (unvollständig) endgeschäumte Polystyrol-Partikel auf, die als kugelförmige und/oder ellipsoide Partikel vorliegen. Das heißt, dass die endgeschäumten Polystyrol-Partikel ihre ursprüngliche Form als "Beads" oder "Perlen" im Wesentlichen beibehalten haben. Dies wiederum ist auf die verringerte Expansion der Partikel während des Endschäumprozesses zurückzuführen. Denn beim Endschäumen herkömmlicher, d. h. unbeschichteter, Polystyrol-Partikel, werden diese üblicherweise stark verformt. In der späteren Platte liegen sie dann als Polyeder vor, die großflächige Kontaktbereiche mit den benachbarten Partikeln aufweisen. Dies hat ein verringertes Zwickelvolumen zur Folge, das zudem kein zusammenhängendes Hohlraumvolumen ausbildet.

Des Weiteren wird vorgeschlagen, dass bei Durchführung des erfindungsgemäßen Verfahrens vor dem Beschichten oder während des Beschichtens der schäumbaren und/oder vorgeschäumten Polystyrol-Partikel mit einem pulverförmigen organischen Bindemittel, diesem Fasern, Füllstoffe und/oder Additive, wie beispielsweise Flammschutzmittel, zugegeben werden. Durch die Zugabe von Fasern, Füllstoffen und/oder Additiven können die stoffspezifischen Eigenschaften der nach diesem Verfahren hergestellten Dämm- und Drainageplatte bedarfsgerecht beeinflusst werden. Vorzugsweise wird Blähgraphit als Flammschutzmittel zugegeben.

Dies gilt analog, wenn schäumbare und/oder vorgeschäumte Polystyrol-Partikel verwendet werden, die Fasern, Füllstoffe und/oder Additive, wie beispielsweise Flammschutzmittel, enthalten.

Blähgraphit liegt in der Regel in Form grober und/oder kantiger Teilchen vor, die eine gute Verzahnung mit den Polystyrol-Partikeln gewährleisten. Im Vergleich zu feinen pulverförmigen Flammschutzmitteln hat demnach der Einsatz von Blähgraphit als Flammschutzmittel keinen negativen Einfluss auf die Stabilität der Dämm- und Drainageplatte. Des Weiteren ist Blähgraphit - im Unterschied zu den meisten herkömmlichen Flammschutzmitteln - toxikologisch unbedenklich.

In Weiterbildung der Erfindung wird vorgeschlagen, dass schäumbare und/oder vorgeschäumte Polystyrol-Partikel verwendet werden, die eine von einer Kugelform abweichende Form, insbesondere eine ellipsoide Form, besitzen. Denn eine von der Kugelform abweichende Form fördert die Ausbildung eines zusammenhängenden Hohlraumvolumens zwischen den Partikeln, wenn diese einem Vor- und/oder Endschäumprozess unterzogen werden.

Als vorteilhaft erweist sich ferner, wenn die schäumbaren und/oder vorgeschäumten Polystyrol-Partikel bei erhöhten Temperaturen, vorzugsweise bei 40 bis 80°C, über einen Zeitraum von einem Tag oder mehreren Tagen gelagert und erst nach der Lagerung einem Endschäumprozess unterzogen werden. Bei entsprechender Lagerung vor dem Endschäumen entweicht das in den schäumbaren und/oder vorgeschäumten Partikeln üblicherweise enthaltene Treibmittel, vorzugsweise Pentan. Die Abreicherung des Treibmittels wiederum bewirkt, dass die Polystyrol-Partikel während des Endschäumens weniger stark expandieren. Durch diese Maßnahme kann demnach ebenfalls die Ausbildung eines zusammenhängenden Hohlraumvolumens gefördert werden.

Gegenstand der Erfindung ist ferner eine Dämm- und Drainageplatte, die nach dem erfindungsgemäßen Verfahren hergestellt werden ist und teilweise verschweißte expandierte Polystyrol-Partikel umfasst, die über ein organisches Bindemittel zusätzlich verklebt sind, wobei ein zwischen den Polystyrol-Partikeln vorhandenes Zwickelvolumen eine zusammenhängende Hohlraumstruktur ausbildet, die bewirkt, dass die Platte wasserdampfdiffusionsoffen und wasserdurchlässig ist. Dadurch, dass die in der Platte vorliegenden expandierten Polystyrol-Partikel sowohl verschweißt als auch verklebt sind, wird ein besonders stabiler Verbund der Partikel erreicht. Die vorgeschlagene Dämm- und Drainageplatte weist somit eine hohe mechanische Stabilität auf. Zugleich besitzt sie über das zusammenhängende Hohlraumvolumen eine Drainagefunktion, die den Einsatz als Drainageplatte ermöglicht, ohne dass - wie bei herkömmlichen Drainageplatten regelmäßig der Fall - Ablaufkanäle in einer Oberfläche der Platte ausgebildet werden müssen. Die vom Gebäude fern zu haltende Feuchtigkeit wird im Inneren der Platte über das zusammenhängende Hohlraumvolumen abgeführt. Zugleich besitzt die Platte eine Dämmfunktion, da expandierte und zumindest zu einem gewissen Grad endgeschäumte Polystyrol-Partikel enthalten sind, die ein dämmendes Zellvolumen besitzen.

Bevorzugt liegen die expandierten Polystyrol-Partikel als kugelförmige und/oder ellipsoide Partikel in der Platte vor. Die endgeschäumten Partikel weisen demnach nur eine geringe Formveränderung in Bezug auf die ursprüngliche Form der verwendeten Polystyrol-Beads und/oder Polystyrol-Perlen auf. Dies lässt sich darauf zurückführen, dass die Polystyrol-Beads und/oder Polystyrol-Perlen während des Endschäumprozesses nur eine im Vergleich zu unbeschichteten Polystyrol-Partikeln geringe Volumenvergrößerung erfahren haben, um ein Zwickelvolumen zwischen den Polystyrol-Partikeln zu erhalten, das ein zusammenhängendes Hohlraumsvolumen ausbildet. Auch der Grad der Verschweißung der Partikel untereinander ist durch die verringerte Volumenvergrößerung während des Endschäumprozesses reduziert, da die kugelförmigen oder ellipsoiden endgeschäumten Partikel im Wesentlichen nur punktuelle bzw. auf kleine Flächen beschränkte Kontaktbereiche aufweisen. Dennoch wird ein stabiler Verbund der Partikel untereinander über das die Partikel zumindest teilweise umhüllende ausgehärtete Bindemittel erreicht, wobei der Bindemittelanteil derart gering gewählt ist, dass das Zwickelvolumen weitgehend frei von Bindemittel bleibt.

In einer vorteilhaften Ausgestaltung der erfindungsgemäßen Dämm- und Drainageplatte sind 0,1 bis 20 Vol.-%, vorzugsweise 0,2 bis 15 Vol.-%, weiterhin vorzugsweise 0,3 bis 10 Vol.-% Bindemittel bezogen auf das Gesamtvolumen der Platte enthalten sind. Der Anteil des Bindemittels ist unter anderem von den konkret verwendeten Ausgangsstoffen, insbesondere von der Art des verwendeten organischen Bindemittels abhängig. Bevorzugt wird ein Dispersionspulver, beispielsweise ein Dispersionspulver auf Basis von Homo-, Co- oder Terpolymeren von Acrylaten, Styrolacrylat, Vinylacetat, Ethylen, Vinylversatat, Vinyllaurat, Alkylacrylaten und/oder Vinylchlorid, als organisches Bindemittel verwendet. Die Verwendung eines organischen Bindemittels besitzt den Vorteil, dass der Bindemittelanteil reduziert werden kann. Denn im Vergleich zu anorganischen Bindemitteln weisen organische Bindemittel eine erhöhte Bindekraft auf. Ein reduzierter Bindemittelanteil wirkt sich wiederum günstig auf die Größe des zwischen den Partikeln verbleibenden Zwickelvolumens aus. Zugleich wird ein stabiler Verbund der Polystyrol-Partikel untereinander erreicht. Anstelle eines einzigen organischen Bindemittels kann auch eine Bindemittelkombination aus verschiedenen organischen Bindemitteln verwendet werden.

Ferner können in der erfindungsgemäßen Dämm- und Drainageplatte Fasern, Füllstoffe und/oder Additive, wie beispielsweise Flammschutzmittel, enthalten sein. Insbesondere enthaltene Additive können eine Optimierung der stoffspezifischen Eigenschaften der Dämm- und Drainageplatte bewirken. Sofern die Dämm- und Drainageplatte ein Flammschutzmittel enthält, ist vorzugsweise Blähgraphit als Flammschutzmittel enthalten.

Des Weiteren wird vorgeschlagen, dass die Dämm- und Drainageplatte nach dem vorstehend beschriebenen erfindungsgemäßen Verfahren hergestellt worden ist. Das heißt, dass schäumbare und/oder vorgeschäumte Polystyrol-Partikel verwendet worden sind, die mit einem pulverförmigen organischen Bindemittel beschichtet, in eine Form eingefüllt und einem Endschäumprozess unterzogen worden sind. Die Zugabe von Feuchtigkeit und/oder Wärme vor dem eigentlichen Endschäumprozess bewirkt eine Aktivierung des Bindemittels. Das aktivierte Bindemittel erweicht und bildet einen die Polystyrol-Partikel zumindest teilweise umhüllenden Bindemittelfilm aus, der die Expansion der Polystyrol-Partikel während des Endschäumprozesses verringert. Auf diese Weise bewirkt das Bindemittel die Ausbildung eines zusammenhängenden Hohlraumvolumens zwischen den Polystyrol-Partikeln.

Die zur Aktivierung des Bindemittels erforderliche Feuchtigkeit und/oder Wärme ist vorzugsweise während des Beschichtens der Polystyrol-Partikel mit dem Bindemittel zugegeben worden. Denn dadurch wird die Haftung des Bindemittels an den Partikeln vor dem eigentlichen Endschäumprozess verbessert. Das an den Partikeln haftende Bindemittel bewirkt ein Verkleben der Partikel und lässt darüber hinaus einen gewissen Grad der Verschweißung der Partikel untereinander während des Endschäumprozesses zu. Eine nach diesem Verfahren hergestellte Dämm- und Drainageplatte weist demnach eine hohe mechanische Stabilität auf.

Eine nach dem erfindungsgemäßen Verfahren hergestellte Dämm- und Drainageplatte weist zudem sehr gute Wärmedämmeigenschaften auf. Denn das Endschäumen der Polystyrol-Partikel führt - wenn auch eingeschränkt - zu einer Expansion und damit zu einer Vergrößerung des Zellvolumens der Partikel. Im Vergleich zu Herstellverfahren, bei denen die vorgeschäumten Polystyrol-Partikel keinem Endschäumprozess unterzogen, sondern lediglich verklebt werden, können somit die Wärmedämmeigenschaften verbessert werden. Zugleich wird die Expansion der Partikel auf ein Maß beschränkt, wodurch sichergestellt ist, dass zwischen den verschweißten und verklebten Partikeln ein Zwickelvolumen verbleibt, das ein zusammenhängendes Hohlraumvolumen ausbildet. Das zusammenhängende Hohlraumvolumen wiederum bewirkt, dass die nach diesem Verfahren hergestellte Dämm- und Drainageplatte wasserdampfdiffusionsoffen und wasserdurchlässig ist.

Das erfindungsgemäße Verfahren sowie hiernach hergestellte Dämm- und Drainageplatten werden nachfolgend anhand von Beispielen näher beschrieben.

### Beispiel 1

Es wurden 85 Gew.-% EPS-Beads mit 15 Gew.-% Dispersionspulver (Basis Terpolymer aus Ethylen, Vinyllaurat und Vinylchlorid) gemischt und unter Zugabe von Druck (1 bar) und Wärme (100°C), wobei Wasserdampf als Heizmedium diente, vorgeschäumt. Dabei erweichte das Dispersionspulver und bildete einen Polymerfilm auf den vorgeschäumten EPS-Perlen aus. Anschließend wurden die beschichteten und vorgeschäumten EPS-Perlen in einem Fließbetttrockner kurz getrocknet.

Neun Liter der beschichteten und vorgeschäumten EPS-Perlen wurden in eine Form mit den Abmessungen 30 cm x 30 cm x 10 cm gegeben und unter Druck (1 bar) und Wärme (100°C) endgeschäumt, wobei wiederum Wasserdampf als Heizmedium diente. Nach dem Druckabbau wurde das Formteil aus der Form entnommen und über einen Zeitraum von einer Woche bei Raumtemperatur getrocknet.

Das derart hergestellte Formteil wies eine Wärmeleitfähigkeit λ nach DIN EN 12667 von 0,029 W/(mK) und eine Dichte ρ nach DIN EN 1602 von 27 kg/m³ sowie eine Zugfestigkeit senkrecht zur Plattenoberfläche nach DIN EN 1607 von 179 kPa auf.

Ferner wurde die Wasserdurchlässigkeit des Formteils getestet. Auf die Oberfläche des Formteils aufgebrachtes Wasser durchdrang dieses unverzüglich und vollständig. Ein Drainage-Effekt war deutlich zu erkennen.

### Beispiel 2

Es wurden 85 Gew.-% frisch vorgeschäumte EPS-Perlen angefeuchtet und mit 15 Gew.-% Dispersionspulver (Basis Ethylen-Vinylacetat-Copolymer) gründlich gemischt und anschließend getrocknet.

Neun Liter der beschichteten vorgeschäumten EPS-Perlen wurden in eine Form mit den Abmessungen 30 cm x 30 cm x 10 cm gegeben und unter Zugabe von Druck (1 bar) und Wärme (100°C), wobei Wasserdampf als Heizmedium diente, geschäumt. Nach dem Druckabbau wurde das Formteil aus der Form entnommen und über einen Zeitraum von einer Woche bei Raumtemperatur getrocknet.

Das derart hergestellte Formteil wies eine Wärmeleitfähigkeit λ nach DIN EN 12667 von 0,030 W/(mK) und eine Dichte ρ nach DIN EN 1602 von 28 kg/m³ sowie eine Zugfestigkeit senkrecht zur Plattenoberfläche nach DIN EN 1607 von 136 kPa auf. Ferner wurde die Wasserdurchlässigkeit des Formteils getestet. Auf der Oberfläche des Formteils aufgebrachtes Wasser durchdrang dieses unverzüglich und vollständig. Ein Drainage-Effekt war deutlich zu erkennen.

### Beispiel 3

Die Ausgangsstoffe und deren Verarbeitung entsprachen denen des Beispiels 1 mit der Ausnahme, dass linsenförmige EPS-Beads verwendet wurden, die zu EPS-Linsen vorgeschäumt wurden.

Hinsichtlich der Eigenschaften Wärmeleitfähigkeit, Dichte und Zugfestigkeit unterschied sich das derart hergestellte Formteil nicht von dem Formteil des Beispiels 1. Es wies jedoch leicht verstärkte Drainageeigenschaften auf.

### Beispiel 4

Die Ausgangsstoffe und deren Verarbeitung entsprachen denen des Beispiels 1 mit der Ausnahme, dass die beschichteten und vorgeschäumten EPS-Perlen nach dem Trocknen im Fließbetttrockner über eine Zeitraum von zwei Tagen bei einer Temperatur von 70°C gelagert wurden, um eine Abreicherung des Treibmittels zu bewirken. Anschließend wurde entsprechend dem Beispiel 1 endgeschäumt.

Das derart hergestellte Formteil wies eine Wärmeleitfähigkeit λ nach DIN EN 12667 von 0,030 W/(mK) und eine Dichte ρ nach DIN EN 1602 von 27 kg/m³ sowie eine Zugfestigkeit senkrecht zur Plattenoberfläche nach DIN EN 1607 von 174 kPa auf. Die Drainageeigenschaften konnten gegenüber dem Beispiel 1 wiederum geringfügig verbessert werden.

### Beispiel 5

Es wurden 70 Gew.-% EPS-Beads mit 10 Gew.-% Dispersionspulver (Basis Vinylacetat-Ethylen-Copolymer) und 20 Gew.-% Blähgraphit gemischt und unter Zugabe von Druck (1 bar) und Wärme (100°C), wobei Wasserdampf als Heizmedium diente, vorgeschäumt. Dabei erweichte das Dispersionspulver und bildete einen Polymerfilm auf den vorgeschäumten EPS-Perlen aus, der das dessen das Blähgraphit an der Oberfläche der EPS-Perlen fixierte. Anschließend wurden die beschichteten und vorgeschäumten EPS-Perlen in einem Fließbetttrockner kurz getrocknet.

Neun Liter der beschichteten und mit Blähgraphit beladenen, vorgeschäumten EPS-Perlen wurden in eine Form mit den Abmessungen 30 cm x 30 cm x 10 cm gegeben und unter Druck (1 bar) und Wärme (100°C) endgeschäumt, wobei wiederum Wasserdampf als Heizmedium diente. Nach dem Druckabbau wurde das Formteil aus der Form entnommen und über einen Zeitraum von einer Woche bei Raumtemperatur getrocknet.

Das derart hergestellte Formteil wies eine Wärmeleitfähigkeit λ nach DIN EN 12667 von 0,031 W/(mK) und eine Dichte ρ nach DIN EN 1602 von 28 kg/m³ sowie eine Zugfestigkeit senkrecht zur Plattenoberfläche nach DIN EN 1607 von 168 kPa auf. Die Drainageeigenschaften konnten im Vergleich zum Formteil des Beispiels 1 wiederum geringfügig verbessert werden.

### Referenzbeispiel

Es wurden neun Liter unbeschichtete vorgeschäumte EPS-Perlen (Korngröße 3 - 8 mm, Schüttdichte 0,015 - 0,016 g/cm³) in eine Form der Abmessungen 30 cm x 30 cm x 10 cm eingegeben und unter Zugabe von Druck (1 bar) und Wärme (100°C), wobei Wasserdampf als Heizmedium diente, der die Form 10 - 15 Sekunden lang von oben nach unten flächig durchströmte, verblockt. Nach dem Druckabbau wurde das Formteil aus der Form genommen und über einen Zeitraum von einer Woche bei Raumtemperatur getrocknet.

Das derart hergestellte Formteil wies eine Wärmeleitfähigkeit λ nach DIN EN 12667 von 0,029 W/(mK) und eine Dichte ρ nach DIN EN 1602 von 16 kg/m³ sowie eine Zugfestigkeit senkrecht zur Plattenoberfläche nach DIN EN 1607 von 173 kPa auf.

Ferner wurde die Wasserdurchlässigkeit des Formteils getestet. Auf die Oberfläche des Formteils aufgebrachtes Wasser konnte dieses nicht durchdringen. Das Formteil war wasserundurchlässig.

Ein nach einem erfindungsgemäßen Verfahren hergestelltes Formteil (Beispiele 1 bis 5) weist demnach gegenüber einer herkömmlichen Dämmplatte aus Polystyrol-Hartschaum (Referenzbeispiel) eine Drainagefunktion auf, die auf das vorhandene ein zusammenhängendes Hohlraumsvolumen ausbildende Zwickelvolumen zurückzuführen ist. Zugleich weisen die nach einem erfindungsgemäßen Verfahren hergestellten Formteile weiterhin sehr gute Wärmedämmeigenschaften sowie eine hohe mechanische Festigkeit auf.

## Patentansprüche

1. Verfahren zur Herstellung einer Dämm- und Drainageplatte unter Verwendung schäumbarer und/oder vorgeschäumter Polystyrol-Partikel und einem organischen Bindemittel, bei dem
die schäumbaren und/oder vorgeschäumten Polystyrol-Partikel mit dem organischen Bindemittel beschichtet, in eine Form eingefüllt und einem Endschäumprozess unterzogen werden, wobei zum Beschichten der schäumbaren und/oder vorgeschäumten Polystyrol-Partikel ein pulverförmiges organisches Bindemittel verwendet wird, das durch Zugabe von Feuchtigkeit und/oder Wärme aktiviert wird, so dass ein die Polystyrol-Partikel zumindest teilweise umhüllender Bindemittelfilm ausgebildet wird, der die Expansion der Polystyrol-Partikel während des Endschäumprozesses verringert.

2. Verfahren nach Anspruch 1,
**dadurch gekennzeichnet, dass** die schäumbaren und/oder vorgeschäumten Polystyrol-Partikel vor dem Beschichten mit dem pulverförmigen organischen Bindemittel angefeuchtet werden.

3. Verfahren nach Anspruch 1 oder 2,
**dadurch gekennzeichnet, dass** die Feuchtigkeit zur Aktivierung des pulverförmigen organischen Bindemittels durch Mischen des pulverförmigen organischen Bindemittels mit feuchten schäumbaren und/oder vorgeschäumten Polystyrol-Partikeln zugegeben wird.

4. Verfahren nach einem der vorhergehenden Ansprüche,
**dadurch gekennzeichnet, dass** die Feuchtigkeit und/oder Wärme zur Aktivierung des pulverförmigen organischen Bindemittels bei einem Vor- oder Endschäumprozess, vorzugsweise in Form von Wasserdampf, zugegeben wird.

5. Verfahren nach einem der vorhergehenden Ansprüche,
**dadurch gekennzeichnet, dass** ein Dispersionspulver, beispielsweise ein Dispersionspulver auf Basis von Homo-, Co- oder Terpolymeren von Acrylaten, Styrolacrylat, Vinylacetat, Ethylen, Vinylversatat, Vinyllaurat, Alkylacrylaten und/oder Vinylchlorid, als pulverförmiges organisches Bindemittel zum Beschichten der schäumbaren und/oder vorgeschäumten Polystyrol-Partikel verwendet wird.

6. Verfahren nach einem der vorhergehenden Ansprüche,
**dadurch gekennzeichnet, dass** 25 bis 99,5 Gew.-%, vorzugsweise 50 bis 99 Gew.-%, weiterhin vorzugsweise 75 bis 98,5 Gew.-% schäumbare und/oder vorgeschäumte Polystyrol-Partikel und 0,5 bis 75 Gew.-%, vorzugsweise 1 bis 50 Gew.-%, weiterhin vorzugsweise 1,5 bis 25 Gew.-% pulverförmiges organisches Bindemittel bezogen auf das Gesamtgewicht der Ausgangsstoffe verwendet werden.

7. Verfahren nach einem der vorhergehenden Ansprüche,
**dadurch gekennzeichnet, dass** vor dem Beschichten oder während des Beschichtens der schäumbaren und/oder vorgeschäumten Polystyrol-Partikel mit einem pulverförmigen organischen Bindemittel, diesem Fasern, Füllstoffe und/oder Additive, wie beispielsweise Flammschutzmittel, zugegeben werden.

8. Verfahren nach Anspruch 7,
**dadurch gekennzeichnet, dass** Blähgraphit als Flammschutzmittel zugegeben wird.

9. Verfahren nach einem der vorhergehenden Ansprüche,
**dadurch gekennzeichnet, dass** schäumbare und/oder vorgeschäumte Polystyrol-Partikel verwendet werden, die Fasern, Füllstoffe und/oder Additive, wie beispielsweise Flammschutzmittel, enthalten.

10. Verfahren nach Anspruch 9,
**dadurch gekennzeichnet, dass** schäumbare und/oder vorgeschäumte Polystyrol-Partikel verwendet werden, die Blähgraphit als Flammschutzmittel enthalten.

11. Verfahren nach einem der vorhergehenden Ansprüche,
**dadurch gekennzeichnet, dass** schäumbare und/oder vorgeschäumte Polystyrol-Partikel verwendet werden, die eine von einer Kugelform abweichende Form, insbesondere eine ellipsoide Form, besitzen.

12. Verfahren nach einem der vorhergehenden Ansprüche,
**dadurch gekennzeichnet, dass** die schäumbaren und/oder vorgeschäumten Polystyrol-Partikel bei erhöhten Temperaturen, vorzugsweise bei 40 bis 80°C, über einen Zeitraum von einem Tag oder mehreren Tagen gelagert und nach der Lagerung einem Endschäumprozess unterzogen werden.

13. Dämm- und Drainageplatte, die nach einem Verfahren nach einem der Ansprüche 1 bis 12 hergestellt worden ist und teilweise verschweißte expandierte Polystyrol-Partikel umfasst, die über ein organisches Bindemittel zusätzlich verklebt sind, wobei ein zwischen den Polystyrol-Partikeln vorhandenes Zwickel-volumen eine zusammenhängende Hohlraumstruktur ausbildet, die bewirkt, dass die Platte wasserdampfdiffusionsoffen und wasserdurchlässig ist.

14. Dämm- und Drainageplatte nach Anspruch 13,
**dadurch gekennzeichnet, dass** die expandierten Polystyrol-Partikel als kugelförmige und/oder ellipsoide Partikel in der Platte vorliegen.

15. Dämm- und Drainageplatte nach Anspruch 13 oder 14,
**dadurch gekennzeichnet, dass** 0,1 bis 20 Vol.-%, vorzugsweise 0,2 bis 15 Vol.-%, weiterhin vorzugsweise 0,3 bis 10 Vol.-% Bindemittel bezogen auf das Gesamtvolumen der Platte enthalten sind.

16. Dämm- und Drainageplatte nach einem der Ansprüche 13 bis 15,
**dadurch gekennzeichnet, dass** ferner Fasern, Füllstoffe und/oder Additive, wie beispielsweise Flammschutzmittel, enthalten sind.

17. Dämm- und Drainageplatte nach Anspruch 16,
**dadurch gekennzeichnet, dass** Blähgraphit als Flammschutzmittel enthalten ist.

## Claims

1. A process for the production of an insulation and drainage board using foamable and/or prefoamed polystyrene particles and an organic binding agent, in which the foamable and/or prefoamed polystyrene particles are coated with the organic binding agent, poured into a mould and undergo a final foaming process wherein, in order to coat the foamable and/or prefoamed polystyrene particles, a powdery organic binding agent is used which is activated by the addition of moisture and/or heat so that a film of binding agent is formed which at least partially encases the polystyrene particles, which film reduces the expansion of the polystyrene particles during the final foaming process.

2. The process as claimed in claim 1, **characterized in that** prior to coating with the powdery organic binding agent, the foamable and/or prefoamed polystyrene particles are moistened.

3. The process as claimed in claim 1 or claim 2, **characterized in that** the moisture for activating the powdery organic binding agent is added by mixing the powdery organic binding agent with moist foamable and/or prefoamed polystyrene particles.

4. The process as claimed in one of the preceding claims, **characterized in that** the moisture and/or heat for activating the powdery organic binding agent is added during a pre-foaming or final foaming process, preferably in the form of steam.

5. The process as claimed in one of the preceding claims, **characterized in that** a dispersible powder, for example a dispersible powder based on homo-, co- or ter-polymers of acrylates, styrene acrylate, vinyl acetate, ethylene, vinyl versatate, vinyl laurate, alkyl acrylates and/or vinyl chloride is used as the powdery organic binding agent in order to coat the foamable and/or prefoamed polystyrene particles.

6. The process as claimed in one of the preceding claims, **characterized in that** 25% to 99.5% by weight, preferably 50% to 99% by weight, more preferably 75% to 98.5% by weight of foamable and/or prefoamed polystyrene particles and 0.5% to 75% by weight, preferably 1% to 50% by weight, more preferably 1.5% to 25% by weight of powdery organic binding agent with respect to the total weight of the starting materials is used.

7. The process as claimed in one of the preceding claims, **characterized in that** prior to or during coating of the foamable and/or prefoamed polystyrene particles with a powdery organic binding agent, fibres, fillers and/or additives such as flame retardants are added.

8. The process as claimed in claim 7, **characterized in that** expanded graphite is added as the flame retardant.

9. The process as claimed in one of the preceding claims, **characterized in that** foamable and/or prefoamed polystyrene particles which contain fibres, fillers and/or additives such as flame retardants are used.

10. The process as claimed in claim 9, **characterized in that** foamable and/or prefoamed polystyrene particles are used which contain expanded graphite as the flame retardant.

11. The process as claimed in one of the preceding claims, **characterized in that** foamable and/or prefoamed polystyrene particles are used which deviate from a spherical shape, and in particular are ellipsoidal in shape.

12. The process as claimed in one of the preceding claims, **characterized in that** the foamable and/or prefoamed polystyrene particles are stored at raised temperatures, preferably at 40°C to 80°C, for a period of one day or several days and after storing undergo a final foaming process.

13. An insulation and drainage board which has been produced as claimed in one of claims 1 to 12 and comprises partially fused expanded polystyrene particles which are additionally bonded by means of an organic binding agent, wherein an interstitial volume existing between the polystyrene particles forms a coherent void structure which ensures that the board is open to steam diffusion and is water-permeable.

14. The insulation and drainage board as claimed in claim 13, **characterized in that** the expanded polystyrene particles are present in the board as spherical and/or ellipsoidal particles.

15. The insulation and drainage board as claimed in claim 13 or claim 14, **characterized in that** it contains 0.1% to 20% by volume, preferably 0.2% to 15% by volume, more preferably 0.3% to 10% by volume of binding agent with respect to the total volume of the board.

16. The insulation and drainage board as claimed in one of claims 13 to 15, **characterized in that** it further contains fibres, fillers and/or additives such as flame retardants.

17. The insulation and drainage board as claimed in claim 16, **characterized in that** it contains expanded graphite as the flame retardant.

## Revendications

1. Procédé destiné à fabriquer un panneau isolant et drainant en utilisant des particules de polymère expansibles ou pré-expansées et un liant organique, lors duquel
on revêt les particules de polystyrène expansibles ou pré-expansées avec la liant organique, on les charge dans un moule et on les soumet à un processus d'expansion finale, pour le revêtement des particules de polymère expansibles ou pré-expansées étant utilisé un liant organique pulvérulent, que l'on active par ajout d'humidité et/ou de chaleur, de sorte à créer un film d' agent liant enveloppant au moins en partie les particules de polystyrène, qui réduit l'expansion des particules de polystyrène pendant le processus d'expansion finale.

2. Procédé selon la revendication 1,
**caractérisé en ce qu'**on humecte les particules de polystyrène expansibles et/ou pré-expansées avant le revêtement avec le liant organique pulvérulent.

3. Procédé selon la revendication 1 ou la revendication 2,
**caractérisé en ce qu'**on ajoute l'humidité pour activer le liant organique pulvérulent par mélange du liant organique pulvérulent avec des particules de polystyrène expansibles et ou pré-expansées humides.

4. Procédé selon l'une quelconque des revendications précédentes,
**caractérisé en ce qu'**on ajoute l'humidité et/ou la chaleur pour l'activation du liant organique pulvérulent lors d'un processus de pré-expansion ou d'expansion finale, de préférence sous forme de vapeur d'eau.

5. Procédé selon l'une quelconque des revendications précédentes,
**caractérisé en ce qu'**on utilise une poudre de dispersion, par exemple une poudre de dispersion sur base d'homopolymères, de copolymères ou de terpolymères d'acrylates, de styrène-acrylate, d'acétate de vinyle, d'éthylène, de versatate de vinyle, de laurate de vinyle, d'acrylates d'alkyle et/ou de chlorure de vinyle en tant que liant organique pour revêtir les particules de polystyrène expansibles ou pré-expansées.

6. Procédé selon l'une quelconque des revendications précédentes,
**caractérisé en ce qu'**on utilise de 25 à 99,5 en poids, de préférence de 50 à 99 % en poids, de manière préférée par ailleurs de 75 à 98,5 % en poids de particules de polystyrène expansibles ou pré-expansées et de 0,5 à 75 % en poids, de préférence de 1 à 50 % en poids, de manière préférée par ailleurs de 1,5 à 25 % en poids de liant organique pulvérulent en rapport au poids total des matières de départ.

7. Procédé selon l'une quelconque des revendications précédentes,
**caractérisé en ce qu'**avant le revêtement ou pendant le revêtement des particules de polystyrène expansibles et/ou pré-expansées avec un liant organique pulvérulent, on leur ajoute des agents de charge et/ou des additifs, comme par exemple des agents ignifuges.

8. Procédé selon la revendication 7,
**caractérisé en ce qu'**on ajoute du graphite expansible en tant qu'agent ignifuge.

9. Procédé selon l'une quelconque des revendications précédentes,
**caractérisé en ce qu'**on utilise des particules de polystyrène expansibles et/ou pré-expansées qui contiennent des fibres, des agents de charge et/ou des additifs, comme par exemple des agents ignifuges.

10. Procédé selon la revendication 9,
**caractérisé en ce qu'**on utilise des particules de polystyrène expansibles et/ou pré-expansées qui contiennent du graphite expansible en tant qu'agent ignifuge.

11. Procédé selon l'une quelconque des revendications précédentes,
**caractérisé en ce qu'**on utilise des particules de polystyrène expansibles et/ou pré-expansées qui présentent une forme différente d'une forme sphérique, notamment une forme ellipsoïdale.

12. Procédé selon l'une quelconque des revendications précédentes,
**caractérisé en ce qu'**on stocke les particules de polystyrène expansibles et/ou pré-expansées à des températures élevées, de préférence à de 40 à 80 °C, sur une période d'un jour ou de plusieurs jours et **en ce qu'**après le stockage, on les soumet à un processus d'expansion finale.

13. Panneau isolant et drainant que l'on a fabriqué d'après un procédé selon l'une quelconque des revendications 1 à 12 et qui comprend des particules de polystyrène expansé en partie soudées, qui sont collées en sus par l'intermédiaire d'un liant organique, un volume interstitiel présent entre les particules de polystyrène créant une structure de vide cohérente qui a pour effet que le panneau soit perméable à la diffusion de vapeur et/ou perméable à l'eau.

14. Panneau isolant et drainant selon la revendication 13,
**caractérisé en ce que** les particules de polystyrène expansé se présentent dans le panneau sous la forme de particules sphériques et/ou ellipsoïdales.

15. Panneau isolant et drainant selon la revendication 13 ou la revendication 14,
**caractérisé en ce que** de 0,1 à 20 % en volume, de préférence de 0,2 à 15 % en volume, de manière préférée par ailleurs, de 0,3 à 10 % en volume d'agent liant sont contenus en rapport au volume total du panneau.

16. Panneau isolant et drainant selon l'une quelconque des revendications 13 à 15,
**caractérisé en ce que** sont contenus par ailleurs des fibres, des agents de charge et/ou des additifs, comme par exemple des agents ignifuges.

17. Panneau isolant et drainant selon la revendications 16,
**caractérisé en ce qu'**il contient du graphite expansible en tant qu'agent ignifuge.
